# EUROPEAN PATENT APPLICATION

(11) **EP 4 628 878 A1**
(43) Date of publication of application: **08.10.2025**
(21) Application number: 24850464.9
(22) Date of filing: 27.02.2024
(51) Int. Cl.: G01N 23/04, G01V 5/00

(54) **RADIATION SCANNING IMAGING SYSTEM**

(30) Priority: 04.08.2023 CN 202310982253
(71) Applicant: NUCTECH COMPANY LIMITED, Beijing 100084 (CN)
(72) Inventor: ZHANG, Li, Beijing 100084 (CN); MENG, Hui, Beijing 100084 (CN); SONG, Quanwei, Beijing 100084 (CN); FAN, Xuping, Beijing 100084 (CN); SHI, Junping, Beijing 100084 (CN)
(74) Representative: Cabinet Beau de Loménie
(86) International application number: PCT/CN2024/078775
(87) International publication number: WO 2025/030804

(57) **Abstract**

The present disclosure relates to a radiation scanning imaging system, comprising: a cabin body having at least one opening and defining a detection channel used for performing scanning imaging on an object to be scanned, the detection channel extending from the at least one opening into the cabin body; a scanning device provided in the cabin body and used for performing scanning imaging on said object; and a conveying device arranged at the bottom of the cabin body and used for driving said object to advance in the extension direction of the detection channel and pass through the scanning device. The conveying device comprises: a bottom wall for defining the bottom of the cabin body; and at least one door body located at the at least one opening of the cabin body and connected to the bottom wall. Said object enters or leaves the detection channel from the at least one door body, wherein the at least one door body can translate relative to the bottom wall so as to be stored in the cabin body or be unfolded outward from the cabin bod.

## Description

### CROSS-REFERENCE TO RELATED APPLICATIONS

The present disclosure claims priority to Chinese Patent Application No. 202310982253.2, entitled "RADIATION SCANNING IMAGING SYSTEM," filed on August 4, 2023, which is hereby incorporated by reference in its entirety.

### TECHNICAL FIELD

The present disclosure relates to the field of radiation scanning imaging, and particularly, to a radiation scanning imaging system.

### BACKGROUND

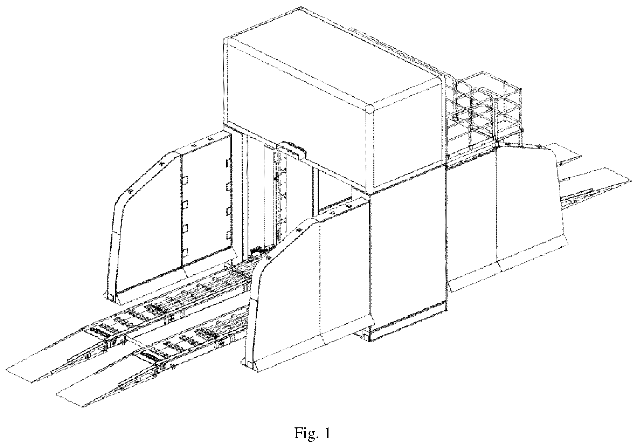

Conventional scanning imaging apparatus for small vehicles mainly comprises two parts: a scanning device and a conveyor device. Structurally, the conveyor device and the scanning device are designed separately (as shown in Fig. 1). Therefore, when the apparatus is arranged at an inspection site, the installation and adjustment of the scanning device is required first, followed by the installation and adjustment of the conveyor device.

In such a scanning imaging apparatus, the conveyor device generally employs polymer leaf chains or rollers as a carrier for objects to be detected, and a gear motor as the power source. The gear motor drives the leaf chains or rollers to rotate, thereby moving the object to be detected placed on the leaf chains or rollers through a radiation scanning channel.

The conveyor device and the scanning device of the apparatus as described above require separate installation and commissioning processes. When relocating, they need to be separately disassembled, packed, and transported, making the process cumbersome and inconvenient.

### SUMMARY

An object of the present disclosure is to provide a new radiation scanning imaging system that is capable of being rapidly mounted at an inspection site and is convenient to disassemble, assemble, and transport during relocation.

Embodiments of the present disclosure provide a radiation scanning imaging system, which comprises: a cabin, provided with at least one opening and defining an inspection channel for scanning and imaging an object to be scanned, the inspection channel extends from the at least one opening into the cabin; a scanning device, disposed in the cabin and configured to scan and image the object to be scanned; and a conveyor device, arranged at the bottom of the cabin, and configured to drive the object to be scanned to travel along an extension direction of the inspection channel and pass through the scanning device, the conveyor device comprises: a bottom wall, defining the bottom of the cabin; and at least one door body, located at the at least one opening of the cabin and connected to the bottom wall, through the at least one opening the object to be scanned enters or exits the inspection channel, the at least one door body is configured to translate relative to the bottom wall to be stowed within the cabin or deployed outwardly from the cabin.

According to some specific embodiments, the conveyor device comprises: a support roller set, arranged on the bottom wall and the at least one door body along the extension direction of the inspection channel; a conveyor plate, configured to being supported on the support roller set and carry the object to be scanned; and a drive mechanism, configured to drive the conveyor plate to move on the support roller set along the extension direction of the inspection channel, thereby enabling the object to be scanned to travel in the extension direction of the inspection channel.

According to some specific embodiments, the conveyor plate is configured to be driven to move so as to be entirely located within the cabin, and be fixed relative to the cabin.

According to some specific embodiments, the drive mechanism comprises a gear motor and a belt drive mechanism, the belt drive mechanism is connected to the gear motor and the conveyor plate, and the gear motor drives the conveyor plate to move on the support roller set via the belt drive mechanism.

According to some specific embodiments, the drive mechanism further comprises a tensioning device, the tensioning device is configured to apply a pre-tensioning force to a conveyor belt of the belt drive mechanism.

According to some specific embodiments, the conveyor device further comprises limit stops, the limit stops are arranged on both sides of the support roller set perpendicular to the extension direction of the inspection channel, and are configured to limit the deviation of the conveyor plate during the movement of the conveyor plate.

According to some specific embodiments, the at least one door body is configured to translate relative to the bottom wall to enter the cabin from the at least one opening and arrive above the bottom wall, or to translate away from the cabin from the at least one opening and abut against the bottom wall in the extension direction of the inspection channel.

According to some specific embodiments, the cabin comprises guide grooves extending parallel to the extension direction of the inspection channel, and the at least one door body is configured to be engaged with the guide grooves and slide along the guide grooves.

According to some specific embodiments, the at least one door body is arranged to translate relative to the bottom wall by means of a hydraulic cylinder, an electric push rod, or manually.

According to some specific embodiments, the conveyor device comprises traveling wheels, the traveling wheels support the at least one door body when the at least one door body translates relative to the bottom wall.

According to some specific embodiments, the at least one door body is further provided with an adjusting rod, after the at least one door body translates away from the cabin from the at least one opening of the cabin and moves to a designated position along the extension direction of the inspection channel, the adjusting rod is configured to adjust the at least one door body such that the at least one door body is flush with the bottom wall in a height direction.

According to some specific embodiments, the bottom wall comprises recesses, the at least one door body comprises protrusions matching with the recesses, and when the at least one door body is flush with the bottom wall in the height direction, the protrusions are accommodated in the grooves and are capable of being fixed to the recesses.

According to some specific embodiments, the radiation scanning imaging system further comprises: a hoisting member, wherein the hoisting member is fixed to a top wall or a side wall of the cabin, and is configured to suspend a conveyor plate of the conveyor device within the cabin, such that the conveyor plate is spaced from the bottom wall by a predetermined distance in a height direction.

According to some specific embodiments, said hoisting member is liftable.

### BRIEF DESCRIPTION OF THE DRAWINGS

The embodiments are described in more detail below in conjunction with the accompanying drawings, and thus the purposes and advantages of the embodiments of the present disclosure will be more easily and better understood by those skilled in the art. In the following drawings, components that are substantially or functionally identical or similar are referred to by the same reference numerals.
Fig. 1 illustrates a schematic diagram of a radiation scanning imaging system according to the prior art;
Figs. 2A-2B illustrate a perspective view and a side view of a radiation scanning imaging system according to an embodiment of the present disclosure, in which a door body located at one opening is omitted;
Figs. 3A-3B illustrate schematic diagrams of a conveyor device of a radiation scanning imaging system according to an embodiment of the present disclosure, where in Fig. 3A, a conveyor plate of the conveyor device is located at an entrance of an inspection channel, and in Fig. 3B, the conveyor plate is located at an exit of the inspection channel;
Fig. 4 illustrates a schematic diagram of arrangement of a drive mechanism of the conveyor device;
Fig. 5 illustrates a schematic diagram of a door body of the conveyor device rotating toward the cabin;

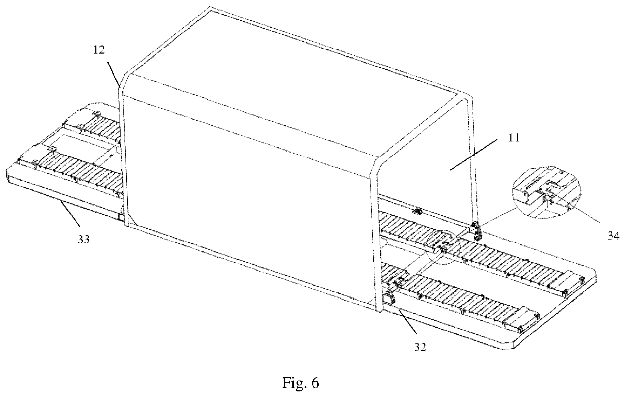

Fig. 6 illustrates a schematic diagram of a hinge structure between a door body and a bottom wall;
Figs. 7A-7B illustrate schematic diagrams of a radiation scanning imaging system according to another embodiment of the present disclosure, where in Fig. 7A, door bodies of the conveyor device are stowed within the cabin, and in Fig. 7B, the door bodies of the conveyor device are deployed outwardly from the cabin;
Figs. 8A-8B illustrate schematic diagrams of a conveyor device of a radiation scanning imaging system according to another embodiment of the present disclosure, where in Fig. 8A, the door bodies are in a stowed state, and in Fig. 8B, the door bodies are in a deployed state;
Fig. 9 illustrates a schematic structural diagram of a guide groove; and
Fig. 10 illustrates a schematic diagram of an adjustment rod according to an embodiment of the present disclosure.

### DETAILED DESCRIPTION

Hereinafter, embodiments of the present disclosure will be described in detail with reference to the accompanying drawings. The following detailed description and accompanying drawings are intended to illustrate principles of the present disclosure, and are not intended to limit the scope of the present disclosure. The solutions described in the following embodiments do not represent all solutions of the present disclosure. Rather, those solutions are merely examples of systems for various aspects of the present disclosure as recited in the appended claims. The scope of the present disclosure is defined by the appended claims.

In the description of the present disclosure, unless otherwise explicitly defined and limited, terms such as "first" and "second" are used for descriptive purposes only and should not be understood as indicating or implying relative importance. Unless otherwise defined or stated, the term "a plurality of" refers to two or more; terms such as "connection" and "fixed" should be interpreted broadly, for example, a "connection" may be a fixed connection, a detachable connection, or an integral connection, or an electrical connection. A connection may be a direct connection, or an indirect connection via an intermediate medium. For those skilled in the art, the specific meanings of the above terms in the present disclosure may be understood according to specific circumstances.

In the description of the present disclosure, the horizontal direction includes not only a direction absolutely parallel to the horizontal plane, but also a direction that is generally recognized in engineering as being substantially parallel to the horizontal plane. The height direction is the direction perpendicular to the horizontal plane, and the height direction includes not only a direction absolutely perpendicular to the horizontal plane, but also a direction that is generally recognized in engineering as being substantially perpendicular to the horizontal plane. Furthermore, directional terms such as "upper", "lower", "top", and "bottom" described in the present disclosure are all understood relative to the height direction. The directional nouns described in the present disclosure are merely intended to describe and explain the present disclosure, and are not intended to limit the scope of the present disclosure.

The radiation scanning imaging system described in the present disclosure may be used for scanning and imaging of small vehicles, and thus can be applied at transportation hubs such as highways and ports for vehicle security inspections, such as contraband inspection. Of course, the present disclosure is not limited thereto, and the radiation scanning imaging system according to various embodiments of the present disclosure can also perform scanning and imaging on other objects other than small vehicles, such as large vehicles, containers, or goods.

Embodiments of the present disclosure disclose a radiation scanning imaging system, which comprises: a cabin, having at least one opening and defining an inspection channel for scanning and imaging an object to be scanned, the inspection channel extending from the at least one opening into the cabin; a scanning device, disposed within the cabin and configured to scan and image the object to be scanned; and a conveyor device, arranged at the bottom of the cabin, and configured to drive the object to be scanned to travel along an extension direction of the inspection channel and pass through the scanning device, the conveyor device comprises a bottom wall, defining the bottom of the cabin; and at least one door body, located at the at least one opening of the cabin and connected to the bottom wall, through which the object to be scanned enters or exits the inspection channel, and the at least one door body is configured to translate relative to the bottom wall to be stowed within the cabin or deployed outwardly from the cabin.

According to the radiation scanning imaging system of the foregoing embodiments, the scanning device is provided within the cabin, and the conveyor device is also integrated into the cabin, being configured to being stowed into or deployed from the cabin, that is, both the conveyor device and the scanning device are provided with the cabin that serves as a carrier and are integrated into an integral body. In this way, when the radiation scanning imaging system is arranged at an inspection site, the scanning device and the conveyor device can be installed and adjusted simultaneously, thereby achieving rapid installation of the system. Furthermore, since the conveyor device can be stowed within the cabin, it is no longer necessary to separately disassemble and pack the scanning device and the conveyor device during relocation, and the retractable design of the conveyor device is also conducive to reduction in the footprint of the entire radiation scanning imaging system. Therefore, the radiation scanning imaging system of the present disclosure is convenient to disassemble, assemble, and transport during relocation.

Hereinafter, the radiation scanning imaging system according to the embodiments of the present disclosure is described in detail with reference to the accompanying drawings. In the following description, an example in which the cabin has two openings arranged opposite each other along the extension direction of the inspection channel is described. In this way, the inspection channel can extend from one opening of the cabin, through the interior of the cabin, to the other opening, which facilitates the entry of the object to be scanned, such as a small vehicle, from one side of the inspection channel and its exit from the other side, without the need for operations such as reversing. Of course, the cabin may also comprise a single opening or more than two openings. When there are more than two openings, a plurality of inspection channels may be provided to facilitate the simultaneous inspection of plural vehicles. The specific number of openings may be selected according to the specific usage requirements of the radiation scanning imaging system.

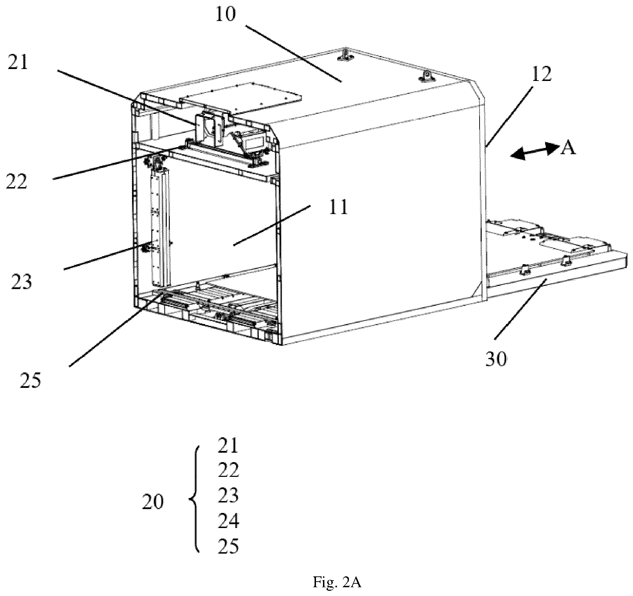

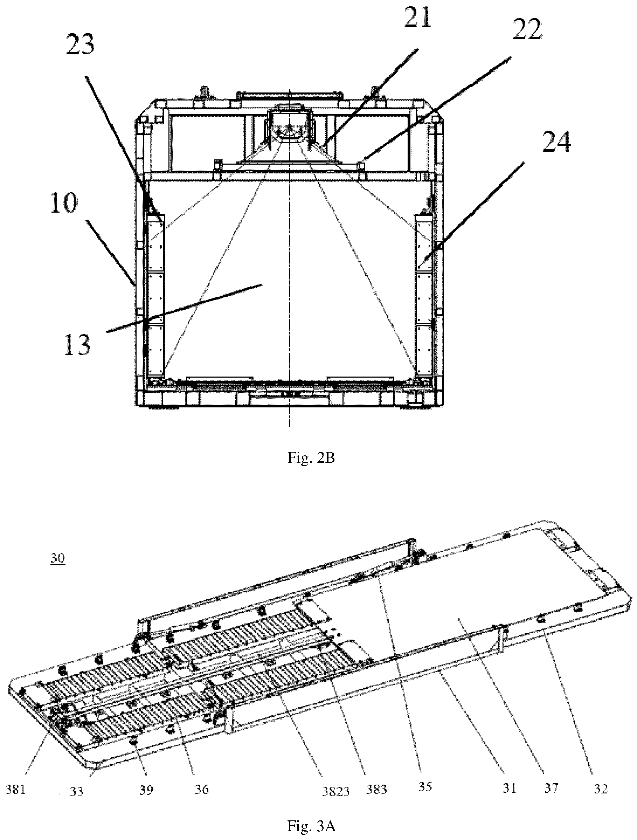

Figs. 2A and 2B illustrate a perspective view and a side view of the radiation scanning imaging system according to the embodiment of the present disclosure, in which the door body at one opening is omitted.

As shown in Figs. 2A and 2B, the radiation scanning imaging system comprises a cabin 10, a scanning device 20, and a conveyor device 30. The cabin 10 has two openings 11, 12, and defines an inspection channel 13 where an object to be scanned is scanned and imaged. The inspection channel 13 extends from the opening 11 of the cabin 10 to the opening 12. The scanning device 20 is provided within the cabin 10, and is configured to perform scanning and imaging on the object to be scanned. The conveyor device 30 is arranged at the bottom of the cabin 10, and is configured to drive the object to be scanned to travel along an extension direction of the inspection channel 13 and pass through the scanning device 20, such that the object to be scanned can be scanned and imaged by the scanning device 20 within the inspection channel 13. Herein, the extension direction of the inspection channel 13, which is also a direction of travel of the object to be scanned, is parallel to the horizontal direction. The arrow A in Fig. 2A indicates the direction of travel of the object to be scanned.

In the embodiment shown in Figs. 2A and 2B, the cabin 10 is formed in a cubic shape, and has an internal accommodating space to form the inspection channel 13 and to facilitate the installation of the scanning device 20 and the conveyor device 30. However, according to other embodiments, the shape of the cabin 10 may also be spherical, tubular, etc.

Furthermore, in the embodiment shown in Figs. 2A and 2B, the scanning device 20 comprises a X-ray machine 21, a collimator 22, a first vertical detector arm 23, a second vertical detector arm 24, a bottom horizontal arm 25, etc. The X-ray machine 21 is arranged at the middle position of a top wall of the cabin 10, and is configured to emit X-rays or the like that transmit through the object to be scanned. The collimator 22 is located below the X-ray machine 21, and is configured to adjust the direction and shape of the X-rays emitted from the X-ray machine 21. The first and second vertical detector arms 23, 24 are arranged at the inner side of the two side walls of the cabin 10, and are configured to receive and detect the X-rays that have transmitted through the object to be scanned. The bottom horizontal arm 25 is installed on the bottom of the cabin 10 and is also provided with an X-ray detector.

When the object to be scanned is driven by the conveyor device 30 to pass through the scanning device 20 at a certain speed, the X-ray machine 21 of the scanning device 20 emits rays to scan the object to be scanned, thereby acquiring an image thereof . It can be understood that the structure and arrangement of the scanning device 20 are not limited to those in the embodiment shown in Fig. 2A and Fig. 2B, and the radiation scanning imaging system of the present disclosure may adopt any other suitable scanning device.

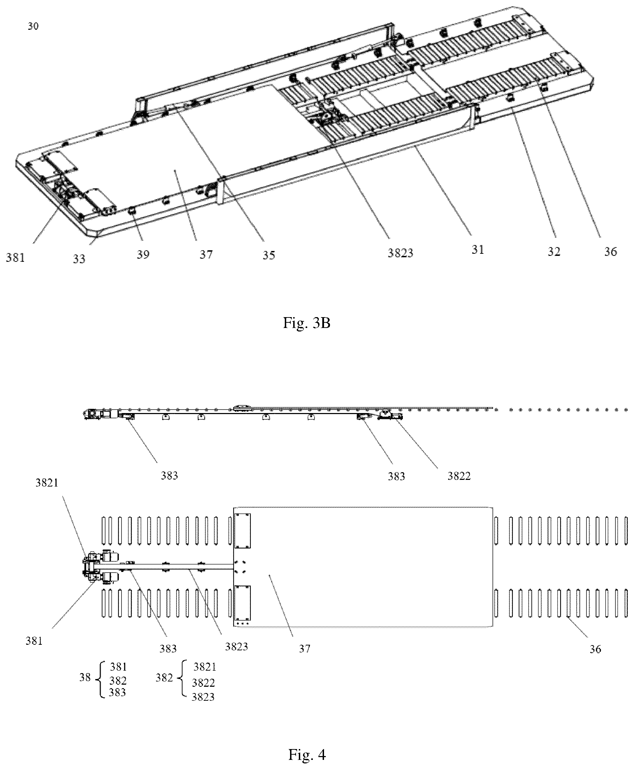

Figs. 3A and 3B illustrate schematic diagrams of the conveyor device of the radiation scanning imaging system according to the embodiment of the present disclosure; in Fig. 3A, the conveyor plate of the conveyor device is located at an entrance of an inspection channel, and in Fig. 3B, the conveyor plate is located at an exit of the inspection channel. Figs. 3A and 3B retain a part of the side wall of cabin. As shown in Figs. 3A and 3B, the conveyor device 30 specifically comprises a bottom wall 31 and door bodies 32 and 33. The bottom wall 31 defines the bottom of the cabin 10. The door bodies 32 and 33 are respectively located at the two openings 11, 12 of the cabin 10, and can be connected to the bottom wall 31. The object to be scanned enters the inspection channel 13 defined by the cabin 10 via the door body 32 and exits the inspection channel 13 via the door body 33. In addition, the door bodies 32 and 33 can move relative to the bottom wall 31 to be stowed within the cabin 10 or deployed outwardly from the cabin 10 (as described in detail below).

The bottom wall 31 and the door bodies 32 and 33 can form a support base frame for the conveyor device 30. The conveyor device 30 further comprises a support roller set 36, which is arranged on the bottom wall 31 and the door bodies 32 and 33 along the extension direction of the inspection channel 13 and includes a plurality of rollers, with each roller rotatably connected to the bottom wall 31 or the door bodies 32 and 33. The conveyor device 30 further comprises a conveyor plate 37, which can be supported on the support roller set 36 and is configured to carry the object to be scanned; and a drive mechanism 38 (see Fig. 4 below), which is configured to drive the conveyor plate 37 to move on the support roller set 36 along the extension direction of the inspection channel 13, thereby driving the object to be scanned to travel in the extension direction of the inspection channel 13.

Specifically, the plurality of rollers of the support roller set 36 are uniformly arranged side-by-side on the bottom wall 31 and the door bodies 32 and 33 along the extension direction of the inspection channel 13, and each of the rollers can rotate relative to the bottom wall 31 or the door bodies 32 and 33. These rollers are non-powered rollers, i.e., the system is not provided with a drive mechanism to actively rotate the rollers. Instead, these rollers rotate passively under the action of the conveyor plate 37 when the conveyor plate 37 is driven to move by the drive mechanism 38, thereby allowing the conveyor plate 37 to slide on these rollers. Furthermore, in the illustrated embodiment, the plurality of rollers of the support roller set 36 are arranged as two rows of rollers extending along the extension direction of the inspection channel 13. The two rows of rollers are spaced apart by a predetermined distance for arranging the components of the drive mechanism 38. The drive mechanism 38 is arranged between the two rows of rollers, while both the drive mechanism 38 and the support roller set 36 symmetrically in the direction perpendicular to the extension direction of the inspection channel, allowing the entire conveyor device to be symmetrically arranged in the direction perpendicular to the extension direction of the inspection channel 13, which is conducive to maintaining balanced force distribution on the conveyor plate 37 during movement.

Of course, the arrangement of the rollers is not limited to that in the illustrated embodiment. The two rows of rollers may also be arranged adjacently, or only a single row of rollers may be arranged. The drive mechanism 38 may be arranged at other positions, for example, on one side of the support roller set 36 perpendicular to the extension direction of the inspection channel 13.

Fig. 4 illustrates a detailed schematic diagram of the arrangement of the drive mechanism of the conveyor device, which additionally illustrates the rollers and the conveyor plate, while omitting the door bodies 32 and 33. As shown in Fig. 4, the drive mechanism 38 comprises a gear motor 381 and a belt drive mechanism 382. The belt drive mechanism 382 is connected to the gear motor 381 and the conveyor plate 37, and the gear motor 381 can drive the conveyor plate 37 to move via the belt drive mechanism 382. The conveyor plate 37 may be specifically formed as a flat plate structure, which can slide on the rollers of the support roller set 36 under the drive of the gear motor 381 through the belt drive mechanism 382. Thus, the object to be scanned, such as a small vehicle, carried on the conveyor plate 37 can travel along the extension direction of the inspection channel 13. In particular, the length of the conveyor plate 37 is set to be equal to or less than the length of the cabin 10, such that the conveyor plate 37 can be driven to move to be entirely located within the cabin 10, facilitating the retraction of the conveyor plate 37 within the cabin 10.

More specifically, the belt drive mechanism 382 of the drive mechanism 38 may comprise a drive pulley 3821 in a force-transmitting connection to the gear motor 381, a driven pulley 3822 fixed to the bottom wall 31, and a conveyor belt 3823 connecting the drive pulley 3821 and the driven pulley 3822. The conveyor plate 37 is fixedly connected to the conveyor belt 3823, so that under the drive of the gear motor 381, the conveyor belt 3823 can pull the conveyor plate 37 to slide on the support roller set 36. The gear motor 381 can be installed at an end portion of the door body 32 or 33 (in the figure, it is connected to the door body 33 at the exit side; according to other embodiments, it may also be connected to the door body at the entrance side) away from the bottom wall 31. The drive pulley 3821 can be arranged at position of the gear motor 381. The driven pulley 3822 can be arranged approximately at the middle position in the length direction of the bottom wall 31. The conveyor belt 3823 can be fixedly connected to an end of the conveyor plate 37 close to the drive mechanism 38, which is conducive to providing sufficient travel range for the conveyor plate 37. Herein, the length direction of the bottom wall 31 is the same as the extension direction of the inspection channel 13. Furthermore, a clamp block (not shown) may be arranged on the bottom surface of the conveyor plate 37, which can be fixedly connected to the conveyor belt 3823, thereby securing the conveyor plate 37 to the conveyor belt 3823.

In addition, as shown in Fig. 4, the drive mechanism 38 further comprises a tensioning device 383 configured to apply a pre-tensioning force to the conveyor belt 3823 of the belt drive mechanism 382, thereby ensuring that the conveyor belt has a predetermined pre-tensioning force and can operate properly. The tensioning device 383 is preferably arranged close to the drive pulley 3821 and the driven pulley 3822 of the belt drive mechanism 382. However, the present disclosure is not limited to this. According to other embodiments, the tensioning device may also be provided at other positions, as long as it can apply a pre-tensioning force to the conveyor belt without interfering with the arrangement of other structures of the conveyor device.

As previously mentioned, the drive mechanism 38 can be arranged between the two rows of rollers of the support roller set 36. Specifically, as shown in Fig. 4, the gear motor 381, the belt drive mechanism 382, the tensioning device 383 and the like of the drive mechanism 38 are arranged along the extension direction of the inspection channel 13 between the two rows of rollers of the support roller set 36. In this case, preferably, the clamp block on the conveyor plate 37 can be arranged at the middle position in the width direction of the conveyor plate 37, thereby ensuring the balanced force distribution of the conveyor plate 37. Herein, the width direction is the direction perpendicular to the extension direction of the inspection channel. Furthermore, the two rows of rollers of the support roller set 36 can be arranged symmetrically with respect to the conveyor belt 3823 provided in the middle, enabling the middle position of the conveyor plate 37 in the width direction to coincide with the middle of the width of the conveyor belt, and thus achieving balanced force distribution of the conveyor plate 37.

Furthermore, as shown in Figs. 3A and 3B, the conveyor device 30 further comprises limit stops 39, which are arranged on both sides of the support roller set 36 perpendicular to the extension direction of the inspection channel 13, and are configured to orient the conveyor plate 37 during its movement, preventing it from deviating relative to the extension direction of the inspection channel 13. The limit stops 39 may include a plurality of limit stops, and the plurality of limit stops 39 may be evenly spaced along the extension direction of the inspection channel 13.

In addition, particularly, the gear motor 381, the drive pulley 3821 provided at position of the gear motor 381, the tensioning device 383 and the like are all arranged on the door body 32 or 33. When the door body 32 or 33 moves relative to the bottom wall 31, these components can move together with the door body 32 or 33 without need of disassembly. Furthermore, as previously mentioned, some of the rollers of the support roller set 36 are also arranged on the door bodies 32 and 33, and similarly, can move together with the door bodies 32 or 33 without disassembly.

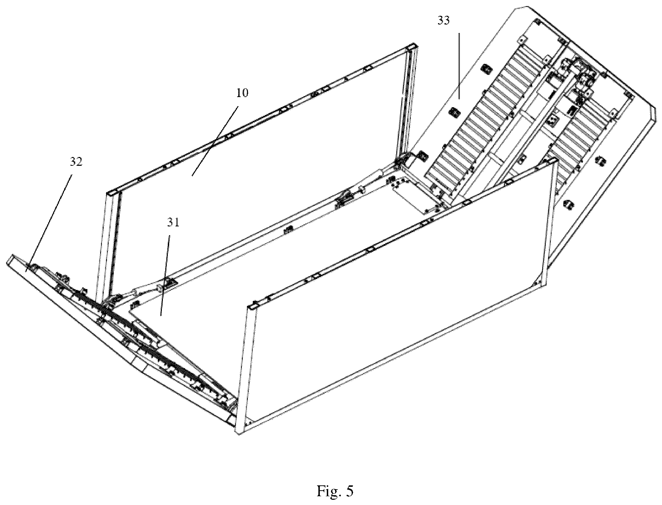

According to the radiation scanning imaging system of the embodiment of the present disclosure, the door bodies 32 and 33 can rotate relative to the bottom wall 31 to be stowed within the cabin 10 or deployed from the cabin 10. Specifically, the door bodies 32 and 33 can respectively rotate relative to the bottom wall 31 toward the cabin 10 to close the openings 11, 12 of the cabin 10 (see Fig. 5 in conjunction with Fig. 2A, Fig. 5 illustrates a schematic diagram of the door bodies of the conveyor device rotating toward the cabin); or the door bodies 32 and 33 can rotate relative to the bottom wall 31 away from the cabin 10 to open the openings 11, 12 of the cabin 10 and ultimately become flush with the bottom wall 31 in the height direction (see Figs. 3A-3B in conjunction with Fig. 2A). Herein, the height direction is the direction perpendicular to the horizontal plane, and the door bodies being flush with the bottom wall in the height direction means that the door bodies are at the height at which the conveyor device can operate normally. When the radiation scanning imaging system is arranged to enter an operating state, the door bodies 32 and 33 can be rotated away from the cabin 10 to open the openings 11, 12 of the cabin 10, and be flush with the bottom wall 31 in the height direction, thereby allowing the conveyor device 30 to normally use. When the radiation scanning imaging system needs to enter a sealed state or to be relocated, the door bodies 32 and 33 can be rotated toward the cabin 10 to close the openings 11, 12 of the cabin 10, enclosing the scanning device, the conveyor device, and the cabin of the entire radiation scanning imaging system into an integrated body, thus facilitating relocation and transportation. The door bodies 32 and 33 can be hinged to the bottom wall 31, for example, by a hinge structure 34, and can rotate relative to the bottom wall 31 by means of structures such as a hydraulic cylinder 35, an electric push rod (not shown), etc.

Furthermore, according to other embodiments, the door bodies 32 and 33 of the radiation scanning imaging system of the present disclosure are configured to translate relative to the bottom wall 31 to be stowed within the cabin 10 or deployed outwardly from the cabin 10. In such embodiments, the configurations of the cabin, the scanning device, and the support roller set and the drive mechanism of the conveyor device are substantially the same as in the aforementioned embodiment. Therefore, detailed descriptions will not be repeated; instead, the differences from the aforementioned embodiment are mainly described below.

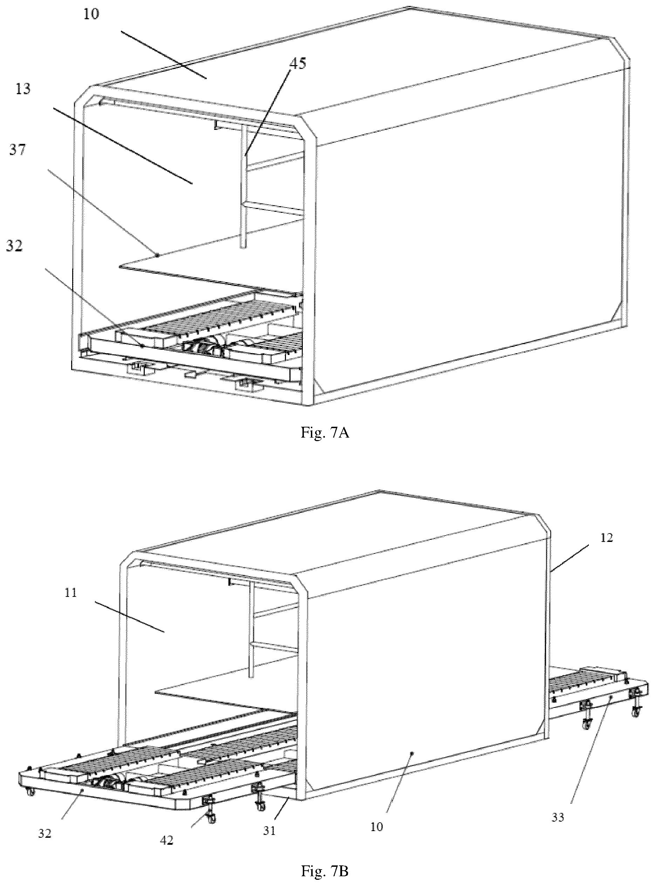

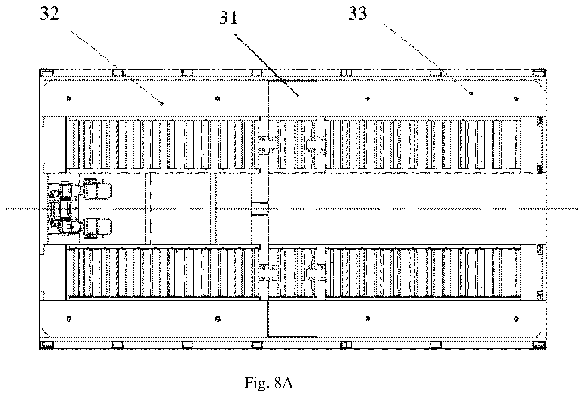

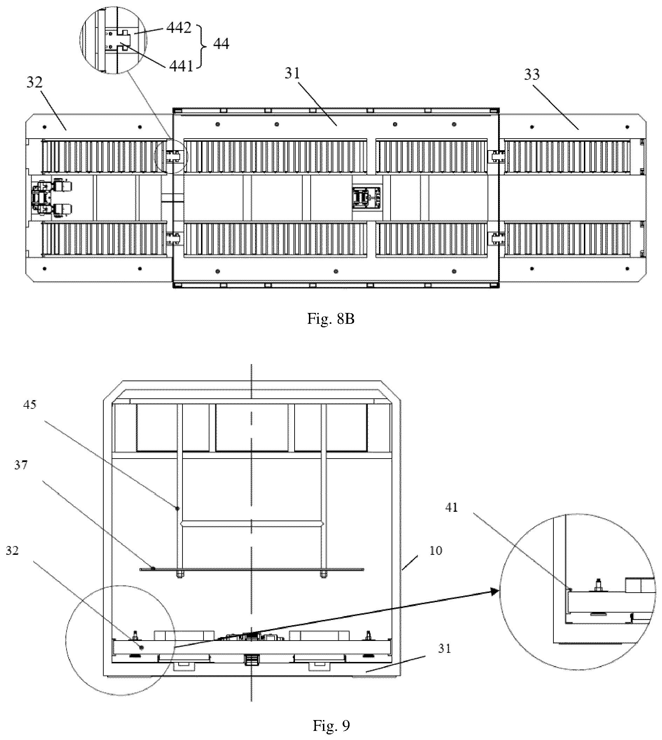

Figs. 7A-Fig. 7B illustrate schematic diagrams of the radiation scanning imaging system according to another embodiment of the present disclosure, where in Fig. 7A, the door bodies of the conveyor device are stowed within the cabin, and in Fig. 7B, the door bodies of the conveyor device are deployed outwardly from the cabin. Furthermore, the scanning device is omitted in both Figs. 7A and 7B. Figs. 8A-8B illustrate schematic diagrams of the conveyor device of the radiation scanning imaging system according to another embodiment of the present disclosure, where in Fig. 8A, the door bodies are in a stowed state, and in Fig. 8B, the door bodies are in a deployed state. As shown in Figs. 7A- 8B, the door bodies 32 and 33 of the conveyor device 30 are configured to translate relative to the bottom wall 31 to be stowed within the cabin 10 or deployed outwardly from the cabin 10. Specifically, the door bodies 32 and 33 are configured to translate relative to the bottom wall 31 to enter the cabin 10 from the openings 11, 12 respectively and arrive above the bottom wall 31 (as shown in Figs. 7A, 8A), or to translate away from the cabin 10 from the openings 11, 12 respectively and abut against the bottom wall 31 in the extension direction of the inspection channel 13 (as shown in Figs. 7B, 8B). Herein, the door bodies 32 and 33 translating to positions above the bottom wall 31 substantially means that the door bodies 32 and 33 translate to positions above the support roller set 36 arranged on the bottom wall 31.

The translational movement of the door bodies 32 and 33 relative to the bottom wall 31 can be achieved by translating mechanisms arranged between the door bodies 32 and 33 and the cabin 10. Specifically, the cabin 10 can comprise guide grooves 41 extending parallel to the extension direction of the inspection channel 13. The door bodies 32 and 33 are configured to be engaged with the guide grooves 41 and sliding along the guide grooves 41, achieving their translational movement relative to the bottom wall 31. Fig. 9 illustrates a detailed schematic structural diagram of the guide groove. As shown in Fig. 9, the guide grooves 41 can be arranged opposite each other on the inner surfaces of the two side walls of the cabin 10, and are configured to accommodate the edges of the door body 32 or 33, allowing the edges of the door body 32 or 33 to slide within the guide grooves 41 along their length direction. Furthermore, the guide grooves 41 are arranged in the height direction above the portion of the support roller set 36 located on the bottom wall 31, preventing interference between the door bodies 32 and 33 and the support roller set 36 when stowed into the interior of the cabin 10. Of course, the translating mechanism of the present disclosure is not limited to the form of the aforementioned guide groove, and may also employ any other suitable mechanism, as long as it can achieve the same function without conflicting with other structures.

In addition, the conveyor device 30 may comprise a door body drive mechanism. The door body drive mechanism is configured to drive the door bodies 32 and 33 to translate relative to the bottom wall 31. The door body drive mechanism can be implemented as a hydraulic cylinder, an electric push rod (not shown), etc. Furthermore, the translational movement of the door bodies 32 and 33 may also be achieved manually.

Moreover, as shown in Fig. 7B, the conveyor device 30 further comprises traveling wheels 42. When the door bodies 32 and 33 translate relative to the bottom wall 31, the traveling wheels 42 support the door bodies 32 and 33 and facilitate their sliding. Specifically, the traveling wheels 42 can be installed on the two end faces of the door bodies 32 and 33 that are opposite in the width direction. A plurality of traveling wheels 42 may be provided, and the plurality of traveling wheels 42 are symmetrically arranged on the door body 32 or 33 to support the door bodies 32 and 33 with balanced force distribution. Furthermore, the traveling wheels 42 are adjustable in the height direction, such that the height of the door bodies 32 and 33 can be adjusted, allowing the door bodies 32 and 33 to be lifted to suitable positions relative to the guide grooves 41 on the side walls of the cabin 10, for example, to be aligned in height and kept parallel with the guide grooves 41, thereby facilitating the engagement of the door bodies with the guide grooves 41 and their sliding within the guide grooves 41. In particular, the traveling wheels 42 are configured to be deployable and retractable relative to the door bodies 32 and 33. In this way, the traveling wheels 42 can be extended or deployed after the door bodies 32 and 33 moves away from the bottom wall 31 by a predetermined distance, preventing interference between the traveling wheels 42 and the bottom wall 31 and the rollers above the bottom wall 31, while providing good support for the door bodies during their movement. Furthermore, after the door bodies 32 and 33 move to their designated positions, the traveling wheels 42 can be retracted, facilitating the lowering of the door bodies 32 and 33 (as described below). In addition, the traveling wheels 42 may also be configured to be detachable, such that they can be installed on the door bodies 32 and 33 when needed and removed from the door bodies after the door bodies move to their designated positions.

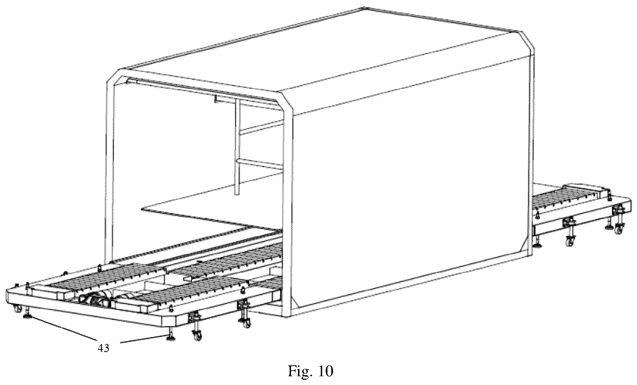

According to the embodiments of the present disclosure, the door bodies 32 and 33 are further provided with adjusting rods 43 (see Fig. 10). After the door bodies 32 and 33 translate away from the cabin 10 relative to the bottom wall 31 and move to their designated positions along the extension direction of the inspection channel 13, the adjusting rods 43 are configured to adjust the door bodies 32 and 33 to be flush with the bottom wall 31 in the height direction. The adjusting rods 43 can be configured to be retractable in height, and a plurality of, for example three, adjusting rods 43 may be provided. By retracting the adjusting rods 43, the door bodies 32 and 33 can be gradually lowered until they are flush with the bottom wall 31 in the height direction (i.e., the portions of the rollers on the door bodies 32 and 33 and the rollers on the bottom wall 31 that are configured to contact the conveyor plate 37 are coplanar). Furthermore, by adjusting the heights of the plurality of adjusting rods 43, the portions of all rollers on the door bodies 32 and 33 and the bottom wall 31 that are configured to contact the conveyor plate 37 can be made coplanar.

In addition, according to the embodiments of the present disclosure, the conveyor device 30 further comprises a fixing device 44 configured to fix the door bodies 32 and 33 to the bottom wall 31. The fixing device 44 comprises protrusions 441 arranged on the edges of the door bodies 32 and 33 close to the bottom wall 31, and recesses 442 arranged on the edges of the bottom wall 31 adjacent to the door bodies 32 and 33. When the door bodies 32 and 33 are lowered to be flush with the bottom wall 31 in the height direction, the recesses 442 are configured to accommodate the protrusions 441 and be fixed to the protrusions 441, thereby fixing the door bodies 32 and 33 relative to the bottom wall 31.

In actual operation, after the door bodies 32 and 33 are deployed outwardly from the cabin 10 and translated to their designated positions, the adjusting rods 43 are extended and their bases contact the ground. Then, the traveling wheels 42 are removed or retracted. The adjusting rods 43 are retracted such that the door bodies 32 and 33 are gradually lowered until they are flush with the bottom wall 31 in the height direction. At this time, the protrusions 441 on the door bodies 32 and 33 fall into the recesses 442, and are fixed to the recesses 442, thereby fixing the door bodies 32 and 33 to the bottom wall 31. Finally, the heights of the plurality of adjusting rods 43 are adjusted to make the portions of all rollers on the door bodies 32 and 33 and on the bottom wall 31 that are configured to contact the conveyor plate 37 coplanar. In this way, the door bodies of the conveyor device can operate normally.

As shown in Fig. 9, the radiation scanning imaging system further comprises a hoisting member 45. The hoisting member is fixed to the top wall or a side wall of the cabin 10, and is configured to suspend the conveyor plate 37 within the cabin 10, spaced from the bottom wall 31 by a predetermined distance in the height direction. This predetermined distance ensures that the conveyor plate 37 does not contact at least the support roller set 36 on the door bodies 32 and 33 when the door bodies 32 and 33 are translated above the bottom wall 31. In particular, the hoisting member 45 is liftable, and thus the distance in the height direction between the conveyor plate 37 and the bottom wall 31 can be adjusted. In this way, when the radiation scanning imaging system needs to enter a sealed state or be relocated and transported, after the conveyor plate 37 is moved under the drive of the drive mechanism 38 to be entirely located within the cabin 10, the conveyor plate 37 can be fixed to the hoisting member 45. The hoisting member 45 raises the conveyor plate 37 to a predetermined height and then suspends it within the cabin 10. Subsequently, the door bodies 32 and 33 can be translated above the bottom wall 31 without interfering with the conveyor plate 37. When the radiation scanning imaging system is arranged to enter the operating state, the hoisting member 45 can lower the conveyor plate 37, placing it onto the support roller set 36 of the bottom wall 31. After the conveyor plate 37 is fixed to the conveyor belt, the radiation scanning imaging system can start operation normally.

According to the radiation scanning imaging system of the present embodiment, when it is necessary to enter a sealed state or be relocated and transported, the conveyor plate 37 is moved above the bottom wall 31 of the cabin 10 under the drive of the drive mechanism 38 to be entirely located within the cabin 10. For example, the conveyor plate 37 may be moved to the middle position of the bottom wall 31, and is then fixed to the hoisting member 45 and raised by the hoisting member 45 to a predetermined height from the bottom wall 31. Subsequently, the fixing devices between the door bodies 32 and 33 and the bottom wall 31 are released, and the adjusting rods 43 are extended to raise the door bodies 32 and 33 to engage with the guide grooves 41. The traveling wheels 42 are extended or installed, and with the support of the traveling wheels 42, the door bodies 32 and 33 are moved along the guide grooves 41 into the cabin 10 until they are located above the bottom wall 31. During this process, the gear motor, transmission wheels, tensioning device, rollers, etc., arranged on the door bodies do not need to be disassembled (only the conveyor belt needs to be disassembled), which allows for the rapid retraction of the conveyor device and facilitates the quick disassembly of the radiation scanning imaging system from the installation site. In addition, since the conveyor device is stowed within the cabin, the footprint of the entire system can be reduced, which facilitates the transport of the system.

Furthermore, when the radiation scanning imaging system needs to enter the operating state, for example, when it needs to be arranged at the site of use, the door body drive mechanism is operated to translate the door bodies 32 and 33 along the guide grooves 41 to move outward from the cabin 10. During the movement of the door bodies 32 and 33, the traveling wheels 42 can be installed or extended to support the door bodies 32 and 33. When the door bodies 32 and 33 move to a position abutting against the bottom wall 31 along the extension direction of the inspection channel 13, the adjusting rods 43 are extended, and the traveling wheels 42 are retracted or detached. Subsequently, the adjusting rods 43 are retracted to lower the door bodies 32 and 33 until they are flush with the bottom wall 31 in height, and then the door bodies 32 and 33 are mutually fixed with the bottom wall 31. The hoisting member 45 is operated to lower the conveyor plate 37 onto the support roller set 36, and the conveyor plate 37 is connected to the conveyor belt, such that the conveyor plate 37 can to slide on the support roller set 36 under the drive of the drive mechanism 38. When the conveyor plate 37 slides to the end of the door body 32 at the entrance side, the object to be scanned, such as a small vehicle, can be loaded onto the conveyor plate 37, such that the object to be scanned can pass through the inspection channel 13 at a certain speed under the drive of the conveyor plate 37 while being scanned and imaged by the scanning device 20. In this way, the conveyor device 30 can quickly enter the operating state without requiring separate installation and commissioning relative to the scanning device 20, which facilitates the rapid installation of the radiation scanning imaging system.

Furthermore, in the foregoing embodiments, the conveyor plate is an integrally formed flat plate structure, which is suspended within the cabin by the hoisting member when the radiation scanning imaging system needs to enter a sealed state or be relocated and transported. However, the present disclosure is not limited to this. According to other embodiments of the present disclosure, the conveyor plate may include two parts that are detachable along the extension direction of the inspection channel (hereinafter, also referred to as a first conveyor plate and a second conveyor plate). In a normal use state, the first and second conveyor plates are fixedly connected, such that the conveyor plates can move on the support roller set as in the foregoing embodiments and drive the object to be scanned to pass through the inspection channel. When the radiation scanning imaging system needs to enter a sealed state or be relocated and transported, the first and second conveyor plates can be disconnected, the first conveyor plate is configured to close the entrance of the cabin, and the second conveyor plate is configured to close the exit of the cabin. This eliminates the need for additional structures to close the entrance and exit of the cabin. The connection of the first and second conveyor plates to the entrance of the cabin and the exit of the cabin can be achieved manually or automatically by arranging robotic arms, hydraulic drive mechanisms, and the like. Furthermore, the first and second conveyor plates are not limited to being configured to close the entrance of the cabin and the exit of the cabin. According to other embodiments, the scanning device of the radiation scanning imaging system (which may include the X-ray machine 21, the collimator 22, the first vertical detector arm 23, the second vertical detector arm 24, the bottom horizontal arm 25, etc., as described above) may be configured in the form of a gantry and arranged at a middle position of the cabin along the extension direction of the inspection channel. Accordingly, the top of the scanning device is arranged at a middle position of the top wall of the cabin along the extension direction of the inspection channel. When the radiation scanning imaging system needs to enter a sealed state or be relocated and transported, the first and second conveyor plates can be disconnected, and can be respectively fixed and fitted to the two sides of the top of the scanning device along the extension direction of the inspection channel on the top wall of the cabin. The connection of the first and second conveyor plates to the top wall of the cabin can be achieved manually or automatically by arranging robotic arms, hydraulic drive mechanisms, and the like. Furthermore, in the case where the scanning device of the radiation scanning imaging system is configured in the form of a gantry and arranged at a middle position of the cabin along the extension direction of the inspection channel, the top wall of the cabin may only include the top of the scanning device, but not the parts on both sides of the top of the scanning device along the extension direction of the inspection channel. In other words, in the normal operating state, the top of the scanning device is regarded as the top wall of the cabin. Thus, when the radiation scanning imaging system needs to enter a sealed state or be relocated and transported, the first and second conveyor plates can be disconnected, and can be respectively fixedly connected two side edges of the top of the scanning device along the extension direction of the detection, in parallel with the top of the scanning device. At this time, the first and second conveyor plates and the top of the scanning device together form the top wall of the cabin. Thus, in the radiation scanning imaging systems of these embodiments, there is no need to separately arrange a hoisting member to fix the conveyor plate, which can reduce the number of system components and thus lower costs.

All descriptions of the present disclosure are for the purpose of illustration and explanation, rather than to exhaustively define or limit the present disclosure to the precise form described. Many modifications or variations can be made within the scope of the inventive concept of the present disclosure. The scope of the present disclosure is defined by the appended claims.

## Claims

1. A radiation scanning imaging system, comprising:
a cabin, provided with at least one opening and defining an inspection channel where an object to be scanned is scanned and imaged, the inspection channel extending from the at least one opening into the cabin;
a scanning device, disposed in the cabin and configured to scan and image the object to be scanned; and
a conveyor device, arranged in the bottom of the cabin, and configured to drive the object to be scanned to travel along an extension direction of the inspection channel and pass by the scanning device, the conveyor device comprising:
a bottom wall, defining the bottom of the cabin; and
at least one door body, which is located at the at least one opening of the cabin and connected to the bottom wall, and through which the object to be scanned enters or exits the inspection channel,
wherein the at least one door body is configured to translate relative to the bottom wall to be stowed in the cabin or deployed outwardly from the cabin.

2. The radiation scanning imaging system according to claim 1, wherein the conveyor device comprises:
a support roller set, arranged on the bottom wall and the at least one door body along the extension direction of the inspection channel;
a conveyor plate, configured to be supported on the support roller set and carry the object to be scanned; and
a drive mechanism, configured to drive the conveyor plate to move on the support roller set along the extension direction of the inspection channel so as to drive the object to be scanned to travel in the extension direction of the inspection channel.

3. The radiation scanning imaging system according to claim 2, wherein the conveyor plate is configured to be driven to move to be entirely located in the cabin, and is configured to be fixed relative to the cabin.

4. The radiation scanning imaging system according to claim 2, wherein the drive mechanism comprises a gear motor and a belt drive mechanism, the belt drive mechanism being connected to the gear motor and the conveyor plate, and the gear motor being configured to drive the conveyor plate to move on the support roller set via the belt drive mechanism.

5. The radiation scanning imaging system according to claim 4, wherein the drive mechanism further comprises a tensioning device configured to apply a pre-tensioning force to a conveyor belt of the belt drive mechanism.

6. The radiation scanning imaging system according to claim 2, wherein the conveyor device further comprises limit stops, the limit stops being arranged on both sides of the support roller set perpendicular to the extension direction of the inspection channel and being configured to limit the deviation of the conveyor plate during the movement of the conveyor plate.

7. The radiation scanning imaging system according to any one of claims 1-6, wherein the at least one door body is configured to translate relative to the bottom wall to enter the cabin from the at least one opening and arrive above the bottom wall, or to translate away from the cabin from the at least one opening and abut against the bottom wall in the extension direction of the inspection channel.

8. The radiation scanning imaging system according to claim 7, wherein the cabin comprises guide grooves extending parallel to the extension direction of the inspection channel, and the at least one door body is configured to be engaged with the guide grooves and slide along the guide grooves.

9. The radiation scanning imaging system according to claim 7, wherein the at least one door body is configured to translate relative to the bottom wall by means of a hydraulic cylinder, or an electric push rod, or manually.

10. The radiation scanning imaging system according to claim 7, wherein the conveyor device comprises traveling wheels for supporting the at least one door body when the at least one door body translates relative to the bottom wall.

11. The radiation scanning imaging system according to claim 7, wherein the at least one door body is further provided with an adjusting rod, the adjusting rod being configured to, after the at least one door body translates away from the cabin from the at least one opening of the cabin and moves to a designated position along the extension direction of the inspection channel, adjust the at least one door body so that the at least one door body is flush with the bottom wall in a height direction.

12. The radiation scanning imaging system according to claim 11, wherein the bottom wall comprises recesses, the at least one door body comprises protrusions matching with the recesses, and in the case that the at least one door body is flush with the bottom wall in the height direction, the protrusions are accommodated and fixed in the recesses.

13. The radiation scanning imaging system according to claim 7, further comprising: a hoisting member, the hoisting member being fixed to a top wall or a side wall of the cabin and being configured to suspend a conveyor plate of the conveyor device in the cabin, such that the conveyor plate is spaced from the bottom wall by a predetermined distance in a height direction.

14. The radiation scanning imaging system according to claim 13, wherein,
the hoisting member is liftable.
